# DEMANDE DE BREVET EUROPEEN

(11) **EP 0 773 561 A1**
(43) Date de publication de la demande: **14.05.1997**
(21) Numéro de dépôt: 96402286.7
(22) Date de dépôt: 28.10.1996
(51) Int. Cl.: H01C 3/12

(54) **Rhéostat de démarrage et/ou de freinage permettant la dissipation thermique de la puissance électrique le parcourant, mise en oeuvre d'un tel rhéostat et véhicule comportant un tel rhéostat**

(30) Priorité: 08.11.1995 FR 9513217
(71) Demandeur: ALCATEL ALSTHOM COMPAGNIE GENERALE D'ELECTRICITE, 75382 Paris Cédex 08 (FR)
(72) Inventeur: Rome, Jacques, 65360 Salles-Adour (FR); Dabezies, Bernard, 92200 Neuilly sur Seine (FR); Gonzales, Juan, 78730 St Arnoult en Yvelines (FR); Ranchy, Eric, 92170 Vanves (FR)
(74) Mandataire: Gosse, Michel

(57) **Abrégé**

La présente invention porte sur un rhéostat de démarrage et/ou de freinage permettant la dissipation thermique de la puissance électrique le parcourant, le rhéostat de démarrage et/ou de freinage étant constitué de moyens de dissipation de cette énergie thermique vers un milieu extérieur et étant caractérisé en ce que les moyens de dissipation sont tels qu'ils favorisent la dissipation thermique par rayonnement.

La présente invention porte également sur la mise en oeuvre d'un tel rhéostat et sur un véhicule comportant un tel rhéostat.

## Description

La présente invention porte sur un rhéostat de démarrage et/ou de freinage, notament pour le domaine ferroviaire, permettant la dissipation thermique de la puissance électrique le parcourant, sur la mise en oeuvre d'un tel rhéostat et sur un véhicule comportant un tel rhéostat.

Lors du freinage d'un train, il est connu d'utiliser les moteurs de traction en tant que générateurs électriques, de manière à convertir l'énergie cinétique en énergie électrique.

L'énergie électrique ainsi produite est ensuite évacuée vers le milieu extérieur au train par l'intermédiaire de rhéostats de freinage.

Les rhéostats de freinage sont des résistances électriques calibrées qui dissipent l'énergie électrique qui les parcourt sous forme calorifique.

Une première solution de l'état de la technique permettant de dissiper cette énergie thermique consiste à utiliser des rhéostats à dissipation convective naturelle.

Les rhéostats à dissipation convective naturelle sont généralement placés en toiture des motrices. La dissipation thermique est alors assurée par la circulation naturelle de l'air et par rayonnement.

La structure de tels rhéostats à dissipation convective naturelle est par exemple décrite dans le document US 3 697 923.

Une seconde solution de l'état de la technique permettant de dissiper l'énergie thermique consiste à utiliser des rhéostats à dissipation convective forcée.

Les rhéostats à dissipation convective forcée sont placés dans les blocs moteurs et nécessitent un système de ventilation, par exemple un groupe moto-ventilateur.

Une telle solution de l'art antérieur a pour inconvénient que les systèmes de ventilation apportent des contraintes de poids, de volume et de niveau sonore.

Les rhéostats à dissipation convective forcée ont souvent une structure identique aux rhéostats à dissipation convective naturelle.

Le mérite de la demanderesse est de proposer un rhéostat de démarrage et/ou de freinage permettant la dissipation thermique de la puissance électrique le parcourant basé sur un principe de dissipation non mis en oeuvre dans le domaine ferroviaire et ne présentant pas les inconvénients des rhéostats de l'art antérieur.

Conformément à l'invention, le rhéostat de démarrage et/ou de freinage permettant la dissipation thermique de la puissance électrique le parcourant est constitué de moyens de dissipation de cette énergie thermique vers un milieu extérieur et est caractérisé en ce que les moyens de dissipation sont tels qu'ils favorisent la dissipation thermique par rayonnement.

Le rhéostat de démarrage et/ou de freinage permettant la dissipation thermique de la puissance électrique le parcourant selon l'invention satisfait également à l'une au moins des caractéristiques suivantes:
- les moyens de dissipation se composent d'au moins une plaque plane,
- la plaque plane est en contact direct avec le milieu extérieur,
- une paroi intermédiaire est disposée entre la plaque plane et le milieu extérieur,
- la plaque plane ou la paroi intermédiaire comporte un revêtement à haute émissivité avec une bonne tenue aux cyclages thermiques,
- ladite paroi intermédiaire est une paroi de protection transparente au rayonnement,
- l'espace compris entre la plaque plane et la paroi intermédiaire est constitué d'un milieu chimiquement inerte,
- le milieu chimiquement inerte est un gaz ou du vide,
- lesdits moyens de dissipation sont disposés en toiture ou en face latérale dudit véhicule.

Le rhéostat de démarrage et/ou de freinage de l'invention a comme avantage la libération de volumes dans la motrice, de l'ordre de plusieurs mètres cubes, ainsi que la diminution ou même la suppression des groupes moto-ventilateurs associés au rhéostat.

L'avantage économique du rhéostat de démarrage et/ou de freinage de l'invention peut être donné par le gain de poids et donc de coût du métal constituant le rhéostat de démarrage et/ou de freinage.

Un rhéostat de démarrage et/ou de freinage de l'état de la technique est constitué de 14 bandes de 220x15 cm, dissipant environ 70 kW à une température de 700°C pour une surface apparente de 60x60 cm.

Une telle dissipation s'effectue pour moitié par convection et pour moitié par rayonnement.

Le rhéostat de démarrage et/ou de freinage de l'invention permet de dissiper la même puissance avec une température de 800°C, pour une surface apparente de 1 m².

Un autre avantage du rhéostat de démarrage et/ou de freinage de l'invention est que plus la température du rhéostat est élevée, plus la surface dissipative nécessaire est faible.

Conformément à l'invention, la mise en oeuvre du rhéostat est telle que ladite plaque plane en contact direct avec ledit milieu extérieur est refroidie par circulation de l'air issu de l'intérieur dudit véhicule.

La mise en oeuvre du rhéostat selon l'invention satisfait également à l'une au moins des caractéristiques suivantes ladite circulation de l'air de refroidissement de ladite plaque plane est une circulation forcée.

Conformément à l'invention, le véhicule, notamment ferroviaire, se caractérise en ce qu'il comporte un rhéostat de démarrage et/ou de freinage selon l'invention ou dont la mise en oeuvre est conforme à l'invention.

Un avantage de la mise en oeuvre du rhéostat de démarrage et/ou de freinage selon l'invention est une augmentation du transfert thermique par convection, c'est à dire, pour des conditions de fonctionnement données, une augmentation du temps de fonctionnement et/ou une diminution de la surface des plaques planes.

Un autre avantage de la mise en oeuvre du rhéostat de démarrage et/ou de freinage selon l'invention est de permettre une souplesse d'agencement du rhéostat et des entrées/sorties d'air de refroidissement.

D'autres buts, caractéristiques et avantages de l'invention apparaîtront à la lecture de la description, dans le cas d'une application dans le domaine ferroviaire, d'un premier et d'un second mode de réalisation préféré du rhéostat de démarrage et/ou de freinage permettant la dissipation thermique de la puissance électrique le parcourant.

Le principe du rhéostat de démarrage et/ou de freinage de l'invention est basé sur une augmentation de la part rayonnante des échanges thermiques.

Le rhéostat de démarrage et/ou de freinage de l'invention se compose d'une plaque plane disposée face au milieu extérieur au véhicule ferroviaire. Une telle plaque plane se substitue aux parois de toiture du véhicule ferroviaire, par exemple de la motrice.

La fonction de cette plaque plane est de favoriser la dissipation radiative de l'énergie thermique vers le milieu extérieur au véhicule.

Conformément à un autre mode de réalisation du rhéostat de démarrage et/ou de freinage permettant la dissipation thermique de la puissance électrique le parcourant, une paroi intermédiaire, non soumise au potentiel des résistances du rhéostat, peut être disposée entre la plaque plane et le milieu extérieur.

Ce second mode de réalisation a comme avantage de permettre de diminuer les problèmes de sécurité.

Ce second mode de réalisation impose l'utilisation de peintures à haute émissivité avec une bonne tenue aux cyclages thermiques.

La paroi intermédiaire du rhéostat de démarrage et/ou de freinage, notamment pour véhicule ferroviaire, est une paroi de protection transparente au rayonnement.

Conformément à une mise en oeuvre préférée du rhéostat de l'invention, la plaque plane en contact direct avec le milieu extérieur est disposée en toiture du véhicule.

La plaque plane est de préférence refroidie par circulation de l'air issu de la partie basse du véhicule.

Dans le cas d'un véhicule ferroviaire, l'air dans cette partie basse du véhicule est à une température inférieure 100°C alors que la température en fonctionnement du rhéostat de démarrage et/ou de freinage de l'invention est de l'ordre de 650°C.

Il résulte de ces données que l'échange de chaleur entre le rhéostat et l'air de refroidissement est important.

La circulation de l'air de refroidissement de la plaque plane est par exemple une circulation forcée. La circulation forcée est par exemple obtenue au moyen d'un ventilateur.

Le véhicule, notamment ferroviaire, de l'invention comporte un rhéostat de démarrage et/ou de freinage conforme à l'invention ou dont la mise en oeuvre est telle que décrite précédemment.

La présente invention trouve également une application dans le domaine routier, par exemple dans le cas des véhicules électriques.

## Revendications

1. Rhéostat de démarrage et/ou de freinage, notamment pour véhicule ferroviaire, permettant la dissipation thermique de la puissance électrique le parcourant, constitué de moyens de dissipation de ladite énergie thermique vers un milieu extérieur, caractérisé en ce que lesdits moyens de dissipation sont tels qu'ils favorisent la dissipation thermique par rayonnement.

2. Rhéostat selon la revendication 1, dans lequel lesdits moyens de dissipation se composent d'au moins une plaque plane.

3. Rhéostat selon la revendication 2, dans lequel ladite plaque plane est en contact direct avec ledit milieu extérieur.

4. Rhéostat selon la revendication 2, dans lequel une paroi intermédiaire est disposée entre ladite plaque plane et ledit milieu extérieur.

5. Rhéostat selon l'une quelconque des revendications 2 à 4, dans lequel ladite face plane ou ladite paroi intermédiaire comporte un revêtement à haute émissivité avec une bonne tenue aux cyclages thermiques.

6. Rhéostat selon la revendication 4, dans lequel ladite paroi intermédiaire est une paroi de protection transparente au rayonnement.

7. Rhéostat selon l'une quelconque des revendications 4 à 6, dans lequel l'espace compris entre la plaque plane et la paroi intermédiaire est constitué d'un milieu chimiquement inerte.

8. Rhéostat selon la revendication 7, dans lequel ledit milieu chimiquement inerte est un gaz ou du vide.

9. Rhéostat selon l'une quelconque des revendications 1 à 8, dans lequel lesdits moyens de dissipation sont disposés en toiture ou en face létérale dudit véhicule.

10. Mise en oeuvre du rhéostat selon l'une quelconque des revendications précédentes, dans laquelle ladite plaque plane est refroidie par circulation de l'air issu de l'intérieur dudit véhicule.

11. Mise en oeuvre du rhéostat selon la revendication 10, dans laquelle ladite circulation de l'air de refroidissement de ladite plaque plane est une circulation forcée.

12. Véhicule, notamment ferroviaire, caractérisé en ce qu'il comporte un rhéostat de démarrage et/ou de freinage selon l'une quelconque des revendications 1 à 9 et/ou dont la mise en oeuvre est conforme à l'une quelconque des revendications 10 à 11.
